# EUROPÄISCHE PATENTSCHRIFT

(11) **EP 3 124 096 B1**
(45) Veröffentlichungstag und Bekanntmachung des Hinweises auf die Patenterteilung: **13.03.2019**
(21) Anmeldenummer: 15179200.9
(22) Anmeldetag: 30.07.2015
(51) Int. Cl.: B01D 53/50, B01D 53/78, F23J 15/04

(54) **KALKSTEIN/KALKHYDRAT-RAUCHGASREINIGUNGSANLAGE MIT REINGAS-BYPASSKANAL UND SUMPFERWEITERUNGSSYSTEM**
LIMESTONE/HYDRATED LIME - FLUE GAS PURIFICATION SYSTEM WITH CLEAN GAS BYPASS CHANNEL AND SUMP EXTENSION SYSTEM
INSTALLATION DE PURIFICATION DE GAZ DE FUMEE PAR CALCAIRE/CHAUX HYDRATEE AVEC UN CANAL DE DERIVATION DE GAZ PUR ET UN SYSTEME D'ELARGISSEMENT DE FOND

(43) Veröffentlichungstag der Anmeldung: 01.02.2017
(73) Patentinhaber: Steinmüller Babcock Environment GmbH, 51643 Gummersbach (DE)
(72) Erfinder: Dizbay, Ali, 51643 Gummersbach (DE); Dreuscher, Helmut, 51643 Gummersbach (DE); Hein, Hans-Dieter, 51643 Gummersbach (DE); Gathmann, Nils, 51643 Gummersbach (DE)
(74) Vertreter: Carstens, Dirk Wilhelm

(56) Entgegenhaltungen:
- EP-A1- 0 945 164
- WO-A1-2009/052775
- WO-A1-2013/115107
- DE-A1- 3 136 155

## Beschreibung

Die vorliegende Erfindung bezieht sich auf eine Rauchgasentschwefelungsanlage mit mindestens einem Wäscher mit einer Verteileinrichtung zum Verteilen eines Absorptionsmittels in den durch den Wäscher strömenden Rauchgasstrom und einem am Boden des Wäschers angeordneten Wäschersumpf.

Verschiedene nasse Rauchgasentschwefelungsverfahren sind bekannt und unterscheiden sich unter anderem durch das Absorbens bzw. Absorptionsmittel und in ihrer apparativen Ausführung. Die apparative Ausführung der Rauchgasreinigungsanlagen ist für das jeweilige Verfahren optimiert im Hinblick auf Reingasqualität, Betriebskosten (Absorbens- und Energiebedarf) sowie Investitionskosten.

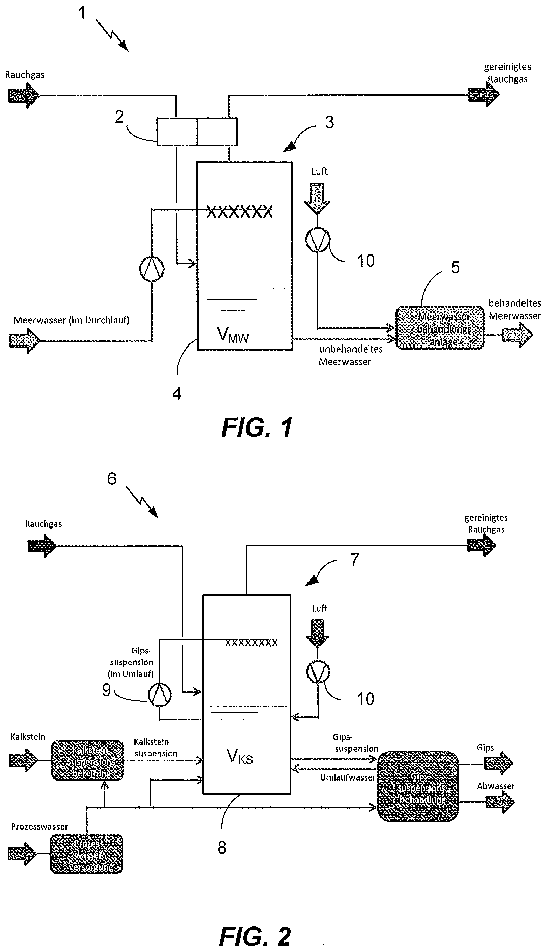

Es ist bekannt, bei Meerwasser-REAs 1 (kurz MW-REA) - wie in Figur 1 gezeigt - Meerwasser als Absorbens zu verwenden. Das Rauchgas tritt hierbei in einen für Meerwasser ausgelegten Wäscher 3 ein und kommt dort mit frischem Meerwasser in Kontakt. Durch den Kontakt mit dem Meerwasser wird das Rauchgas zum einen teilentschwefelt und zum anderen abgekühlt. Das Rauchgas kühlt sich annähernd auf die Temperatur des Meerwassers ab (typisch <35°C). In der Regel ist die Meerwassertemperatur niedriger als die Taupunkt-Temperatur des Rauchgases. Daher kondensiert Wasserdampf aus dem Rauchgas aus. Das abgekühlte und gereinigte Rauchgas (jetzt Reingas) verlässt den Wäscher 3 als Reingas. Vorteilhafterweise wird das Rauchgas über einen Gas-Gas-Wärmeübertrager 2 geleitet. Dabei gibt das Rauchgas einen Teil seiner Wärme ab und wird dabei vor Eintritt in den Wäscher schon vorgekühlt. Das abgekühlte und gereinigte Reingas durchströmt dann beim Verlassen des Wäschers 3 den Gas-Gas-Wärmeübertrager 2. Dabei nimmt das Reingas die übertragene Wärme auf und wird dadurch aufgeheizt. Das aufgeheizte Reingas verlässt die Anlage 1 in Richtung Kamin (nicht dargestellt). Die Wiederaufheizung des Reingases ist vorteilhaft, damit eine ausreichende Ausbreitung des Rauchgases am Kaminaustritt gewährleistet ist.

Das dem Wäscher 3 zugeführte Meerwasser hat das Rauchgas entschwefelt. Das benutzte Meerwasser und das Kondensat aus dem Rauchgas sammeln sich in einem Wäschersumpf 4, der ein für das MW-REA-Verfahren typisches Volumen V_{MW} aufweist, und fließen von dort in eine Meerwasserbehandlungsanlage 5, in die über Kompressoren oder Gebläse 10 Oxidationsluft in das aufzubereitende Wasser gedüst wird. Eine Rezirkulation des Meerwassers zurück in den Wäscher 3 findet nicht statt.

Bei einer wie in Figur 2 gezeigten bekannten Kalkstein-REA 6 (kurz KS-REA) tritt das Rauchgas in der Regel ungekühlt in den für Kalksteinssuspension ausgelegten Wäscher 7 ein. Durch den Kontakt mit der Waschsuspension wird das Rauchgas zum einen teilentschwefelt und zum anderen abgekühlt. Das Rauchgas kühlt sich annähernd auf die Temperatur der Waschsuspension ab. Weil die Waschsuspension rezirkuliert wird, ergibt sich im System annähernd die adiabatische Sättigungstemperatur des Rauchgases (typischerweise 50 bis 65°C) und das Rauchgas wird mit Wasserdampf gesättigt. Das Reingas verlässt die Anlage wiederum in Richtung des nicht dargestellten Kamins. Eine Wiederaufheizung des Reingases ist in der Regel nicht notwendig.

Die dem Wäscher 7 zugeführte Waschsuspension hat das Rauchgas teilentschwefelt. Die Waschsuspension sammelt sich im Wäschersumpf 8, der ein für das Kalksteinverfahren typisches Volumen V_{KS}, aufweist. Die Waschsuspension wird aus dem Wäschersumpf 8 über Rezirkulationspumpen 9 dem Wäscher 7 wieder zur Reinigung der Rauchgase zugeführt.

Im Wäschersumpf 8 werden die Sulfite in der Waschsuspension zu Sulfaten oxidiert. Dazu wird Luft über Kompressoren oder Gebläse 10 in den Wäschersumpf 8 eingebracht. Das Calciumsulfat fällt aus der übersättigten Lösung aus und bildet mit Wasser Gipskristalle. Während der Verweilzeit im Wäscher 7 wachsen die Gipskristalle und der in der Waschsuspension enthaltene Kalkstein löst sich. Über Rührwerke (nicht dargestellt) wird die Waschsuspension im Wäschersumpf umgewälzt, um die Feststoffe suspendiert zu halten.

Ist eine REA für den Betrieb mit Meerwasser ausgelegt worden, ist ein Wechsel von Meerwasser als Absorbens zu Kalksteinsuspension problematisch. Die Probleme ergeben sich im Wesentlichen aus zwei Faktoren. Erstens ist der Reingasvolumenstrom bei der Verwendung von zirkulierender Kalksteinsuspension wesentlich größer als bei der Verwendung von Meerwasser, da KS-REAs im Gegensatz zu MW-REAs im Umlauf und nicht im Durchlauf betrieben werden. Der größere Volumenstrom resultiert in erheblich vergrößerten Druckverlusten, die unter Umständen nicht mehr mit den bestehenden (Rauchgas-)Gebläsen, die auf den Meerwasserbetrieb ausgelegt sind, bewältigt werden können. Einen wesentlichen Beitrag an den Druckverlusten im Reingasweg leistet dabei der Gas-Gas-Wärmeübertrager 2 (im Folgenden "GGW"), der üblicherweise in MW-REAs eingesetzt wird. Zweitens erfordern KS-REAs eine gewisse Verweilzeit der Suspension im Wäschersumpf 8 für die Lösung des Kalksteins und für das Gipskristallwachstum. Dafür werden in KS-REAs die Wäscher 7 mit einem ausreichenden Sumpfvolumen Volumen V_{KS} ausgestattet. Das Sumpfvolumen in MW-REA-Wäschern ist deutlich kleiner und führt beim Betrieb mit Kalkstein zu unzureichendem Gipskristallwachstum und unzureichender Lösung des Kalksteins.

Es gibt auch REAs bei denen als Absorptionsmittel Kalkhydrat eingesetzt wird. Durch Zumischen von Wasser zum Kalkhydrat wird Kalkmilch erzeugt, welche dann als Waschsuspension verwendet wird. Die Kalkmilch bzw. das Kalkhydrat kann ebenso durch Mischung von Branntkalk mit Wasser erzeugt werden, wobei der Branntkalk zu Kalkhydrat reagiert. Bei einem Wechsel vom Betrieb einer MW-REA zu einer REA, bei der Kalkhydrat als Absorptionsmittel verwendet wird, ergeben sich ähnliche Probleme wie beim Wechsel zum Betrieb mit Kalkstein.

Es wird Bezug genommen auf die WO 2013/115107 A1, die eine MW-REA aufweist mit einem Entschwefelungsabsorptionsturm zum Reinigen von Rauchgasen. Ein Oxidationstank mit einer Belüftungsvorrichtung, um Luft in das Meerwasser mit dem absorbierten Schwefel einzuführen, wird abströmseitig vom Absorptionsturm vorgesehen und dient zur Wasseraufbereitung des mit dem absorbierten Schwefeleintrag versehenen Meerwassers.

Weiterhin ist aus der WO 2009/052775 A1 ein Verfahren und eine Anlage bekannt zur Reinigung von Rauchgasen aus mit fossilen Brennstoffen befeuerten Kraftwerken, bestehend aus mehreren Absorptionsstufen mit einem Absorber, in dessen oberen Bereich mindestens ein mit Suspension beaufschlagte Kontakteinbauebene angeordnet ist, die vom Rohgas durchströmt wird und der untere Bereich des Absorbers einen Absorptionssuspensionssumpf aufweist, über dem der Zulauf für das Rohgas angeordnet ist, einem separaten Reaktionsbehälter bestehend aus zwei durch eine Trennwand mit Überlauf getrennten Kammern, dessen erste Kammer mit dem Sumpf der Absorptionssuspension in Verbindung steht und in die Oxydationsluft eingebracht wird und in deren unteren Bereich eine Öffnung zum Ausschleusen von Suspension angeordnet ist und dessen zweite Kammer mit einem Kalk-/Kalksteinsuspensionsbehälter in Verbindung steht, einem Gasabzug über dem Reaktionsbehälter, welcher den Brüden des Reaktionsbehälters in einen Brüdenabzug absaugt, einer Leitung für Absorptionssuspension zwischen mindestens einer Sprühebene des Absorbers und dem Reaktionsbehälter, einer Prozeßwasserzuführung zu einer Reinigungsebene oberhalb mindestens einer Tropfenabscheiderebene oberhalb der Einbauebene und der Sprühebene.

Ebenso ist aus der DE 3136155 A1 ein Verfahren zur Zuführung von Absorbenzien beim Nass-Kalk-Verfahren zur Abgasdesulfierung bekannt.

Schlussendlich ist aus der EP 09 45 164 A1 ein Naß- Rauchgas-Entschwefelungs-Verfahren bekannt zum Einführen von Verbrennungsabgas mit einem Schwefeloxidanteil von 1 Volumen-% oder darüber in einen Absorbtionsturm, bei dem das Verbrennungsabgas entschwefelt wird, in dem es in Kontakt mit einer Schlämme gebracht wird, welche gelöschten Kalk oder Kalciumkarbonat enthält, Luft in die im unteren Abschnitt des Absoptionsturms gespeicherte Schlämme geblasen wird, um die Schlämme in eine Gipsschlämme überzuführen, und ein Teil der Gipsschlämme zurückgewonnen wird, während der Rest als Absorptionsflüssigkeit für das Schwefeloxid rezirkuliert wird.

Im Folgenden werden REAs, die Kalkstein und Kalkhydrat verwenden, mit dem Begriff Calcium-REA bzw. CA-REA zusammengefasst.

Aufgabe der Erfindung ist es daher eine MW-REA so auszugestalten, dass ein Wechsel zum Betrieb als CA-REA ermöglicht wird.

Erfindungsgemäß wird die Aufgabe durch eine Rauchgasentschwefelungsanlage gemäß Anspruch 1 gelöst.

Durch den Reingas-Bypasskanal wird vorteilhafterweise der erhöhte Druckverlust bei einer MW-REA im Betrieb als CA-REA verringert oder sogar kompensiert. Gleichzeitig besteht aber weiterhin die Möglichkeit die Wärmeübertragungseinrichtung zum Abkühlen des vom Kessel kommenden Rauchgases zu verwenden, um den Frischwasserbedarf bei Betrieb als CA-REA zu verringern. Vorteilhafterweise kann durch Einsatz des erfindungsgemäßen Sumpferweiterungssystems der für den Betrieb als MW-REA ausgelegte Wäscher beim Betrieb als CA-REA weiter verwendet werden, da das Sumpferweiterungssystem zusammen mit dem vorhandenen Wäschersumpf ein ausreichendes Volumen bzw. ausreichende Verweilzeit für die Lösung des ggf. verwendeten Kalksteins und für die Gipskristallbildung (bei Verwendung von Kalkstein als auch bei Verwendung von Kalkhydrat) vorsieht.

Vorteilhafterweise ist der Strömungswiderstand des vorgeschlagenen Reingas-Bypasskanals durch eine im Kanal befindliche, lokale Querschnittsverengung bestimmt, wobei die Querschnittsverengung im Betrieb invariabel (bevorzugterweise durch eine einsetzbare Blende) oder im Betrieb variabel (bevorzugterweise durch ein Ventil und/oder Klappen) ausgestaltet ist. Hierdurch kann die Teilmenge an Reingas, die an der Wärmeübertragungseinrichtung vorbei strömt, in Abhängigkeit von Messgrößen oder Betriebsbedingungen (wie zum Beispiele Verschmutzungen und Ablagerungen) beeinflusst werden.

Für das erfindungsgemäße Sumpferweiterungssystem wird vorteilhafterweise ein Sumpferweiterungstank mit einer Umwälzvorrichtung (zum Beispiel ein oder mehrere Rührwerke) vorgesehen, die eine Ablagerung der Gipskristalle im Erweiterungstank vermeiden. Dabei ist es insbesondere Vorteilhaft, dass das Rührwerk bei einem zylindrisch ausgebildeten Erweiterungstank zwischen der Einströmöffnung der Verbindungsleitung und der Ansaugöffnung eines Umwälzpumpensystems an der in Umfangsrichtung kürzeren Strecke angeordnet ist und das Rührwerk mit einer in Richtung der Einströmöffnung orientierten Förderrichtung angeordnet ist (und nicht radial zur Tankmitte hin). Hierdurch wird eine besonders gute Vermischung von einströmender Suspension mit Suspension im Erweiterungstank erreicht und eine Kurzschlussströmung vermieden.

Vorteilhafterweise weist die erfindungsgemäße Rauchgasentschwefelungsanlage zwei oder mehr Verbindungsleitungen zwischen Wäschersumpf und Erweiterungstank auf. Dadurch kann der Betrieb auch aufrechterhalten werden, wenn eine Leitung ausfällt. Wenn jede Verbindungsleitung eine eigene Spülwasserzuleitung aufweist, ermöglicht dies außerdem gegenüber einer einzelnen Verbindungsleitung mit großem Durchmesser eine kleiner dimensionierte Spülwasserversorgung.

In weiteren Unteransprüchen sind vorteilhafte Ausgestaltungen beschrieben.

Die Erfindung soll nun anhand der beigefügten Figuren erläutert werden:
Fig. 1 zeigt eine schematische Übersicht einer bekannten MW-REA.
Fig. 2 zeigt eine schematische Übersicht einer bekannten KS-REA.
Fig. 3 zeigt eine schematische Übersicht der erfindungsgemäßen CA-REA gemäß einer Ausführungsform der vorliegenden Erfindung in der Kalkstein als Absorptionsmittel verwendet wird.
Fig. 4 zeigt eine vereinfachte Darstellung der Ausführungsform der CA-REA der Fig. 3
Fig. 5 zeigt eine vereinfachte Darstellung des Reingas-Bypasskanals einer Ausführungsform der erfindungsgemäßen CA-REA.
Fig. 6 zeigt eine vereinfachte Darstellung eines alternativen Reingas-Bypasskanals einer Ausführungsform der erfindungsgemäßen CA-REA.
Fig. 7 -9 zeigen vereinfachte Darstellung verschiedener Ausführungsformen des Reingas-Bypasskanals der erfindungsgemäßen CA-REA.
Fig. 10 zeigt eine vereinfachte Darstellung einer Ausführungsform der erfindungsgemäßen CA-REA, bei der mehrere Reingas-Bypasskanäle verwendet werden.
Fig. 11 zeigt einen Wäscher einer MW-REA ohne Sumpferweiterungssystem.
Fig. 12 zeigt eine vereinfachte Darstellung einer Ausführungsform der erfindungsgemäßen CA-REA mit einem für eine MW-REA ausgelegten Wäscher und Sumpferweiterungssystem.
Fig. 13 zeigt eine detailliertere Darstellung der Ausführungsform der Figur 12.
Fig. 14 zeigt eine Kurzschlussströmung in einem Erweiterungstank.
Fig. 15 zeigt eine vorteilhafte Ausgestaltung eines Erweiterungstanks mit Rührwerk.
Fig. 16 - 20 zeigen vereinfachte Darstellungen weiterer Ausführungsformen der erfindungsgemäßen CA-REA mit einem für eine MW-REA ausgelegten Wäscher und Sumpferweiterungssystem.
Fig. 21 zeigt eine vereinfachte Darstellung einer weiteren Ausführungsform der erfindungsgemäßen CA-REA mit mehreren für MW-REA ausgelegten Wäschern und einem gemeinsam genutzten Sumpferweiterungssystem.

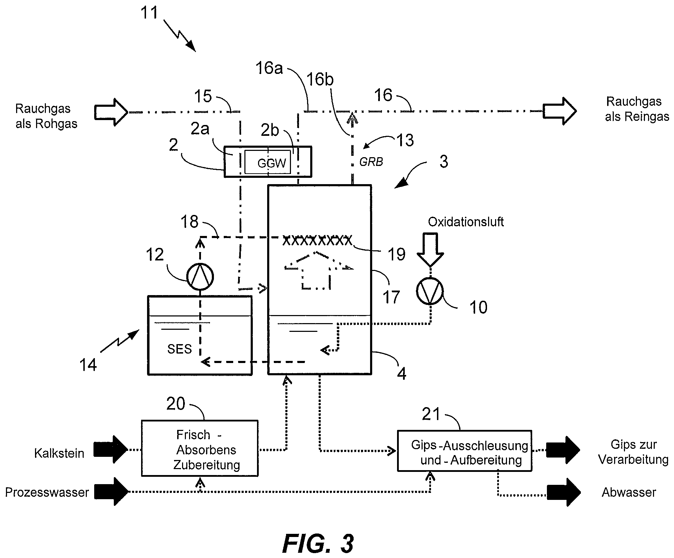

Die erfindungsgemäße CA-REA ist so adaptiert, dass sie vorteilhafterweise mit Kalkstein oder Kalkhydrat als Absorptionsmittel betreibbar ist. Auch wenn in Figur 3 (und folgenden Figuren) die Erfindung im Zusammenhang mit einer Kalkstein REA bzw. KS-REA 11 erläutert wird, ist die erfindungsgemäße CA-REA ebenso mit Kalkhydrat betreibbar.

Die KS-REA 11 der Figur 3 weist - gegenüber einer MW-REA 1 wie sie in der Figur 1 gezeigt ist - zusätzliche funktionale Elemente auf, die eine Umwandlung der MW-REA 1 in eine mit Kalkstein betreibbare REA unter Wiederverwendung von existierenden für die MW-REA ausgelegten Anlagenelemente ermöglicht. Insbesondere wird durch die Wiederverwendung des für den MW-Betrieb ausgelegten Wäschers 3 und der Wärmeübertragungseinrichtung (im bevorzugten Ausführungsbeispiel der Figur 3 ein Gas-Gas-Wärmeübertrager (GGW) 2) als auch weiterer für die MW-REA vorgesehenen Elemente, wie Pumpensystem oder Kompressoren für Oxidationsluft der Wechsel des Absorptionsmittels von Meerwasser auf Kalkstein bei geringen Zusatzinvestitionskosten ermöglicht.

Wie einleitend beschrieben, ergeben sich bei einer REA durch den Umlaufbetrieb mit Kalksteinsuspension höhere Reingastemperaturen als im Durchlaufbetrieb einer solchen REA mit Meerwasser. In beiden Fällen (d.h. Betrieb als MW-REA und Betrieb als KS-REA) ist das Reingas mit Wasserdampf gesättigt. Wegen der höheren Temperatur ist die Wasserdampfbeladung jedoch im Umlaufbetrieb bei der KS-REA wesentlich größer als im Durchlaufbetrieb mit dem relativ kühlen Meerwasser bei der MW-REA. Dadurch ergibt sich ein wesentlich größerer Reingasvolumenstrom im KS-REA Betrieb (ungefähr +25%). Wird nun eine REA (mit Elementen wie Wäscher 3, GGW 2 und Rauchgaskanäle), die für MW-Betrieb ausgelegt ist, mit Kalkstein oder Kalkmilch als Absorptionsmittel betrieben, ergeben sich durch den größeren Reingasvolumenstrom deutlich größere Druckverluste im Reingasströmungsweg. Den größten Anteil an den Druckverlusten im Reingasweg hat in der Regel der GGW. Entsprechend ist im GGW auch die Druckverlustzunahme absolut am größten. Die erhöhten Druckverluste bedeuten zum einen, einen höheren Leistungsbedarf bei der Rauchgasförderung und zum anderen, eine größere installierte Leistung für das Gebläse zur Rauchgasförderung (ID-Fan). Je nach Auslegung, ist es auch möglich, dass das bestehende Gebläse den erforderlichen Differenzdruck nicht darstellen kann und, dass im GGW 2 unzulässig große Strömungsgeschwindigkeiten auftreten.

Der Wäscher 3 der KS-REA 11 in der Figur 3 ist für Betrieb als MW-REA ausgelegt und weist somit nur ein sehr kleines Sumpfvolumen V_{MW} auf. Für den Betrieb der REA mit Kalksteinsuspension ist jedoch ein relativ großes Sumpfvolumen V_{KS} bzw. eine relativ große Verweilzeit τ_{KS} für die Lösung des Kalksteins und die Gipskristallbildung notwendig. Ohne zusätzliche bauliche Maßnahmen ergäbe sich bei Betrieb des für MW ausgelegten Wäschers 3 mit Kalkstein als Absorptionsmittel eine sehr geringe Verweilzeit für die Kalksteinsuspension. Wegen der kurzen Verweilzeit, könnten die Gipskristalle nicht ausreichend wachsen und es würde nur ungenügend Kalkstein nachgelöst, was zu Einbußen bei der Abscheideleistung der Anlage führt.

Die oben aufgezeigten Probleme beim Betrieb einer MW-REA als KS-REA werden durch Vorsehen eines Reingas-Bypass-Kanals 13 am GGW und eines Sumpferweiterungssystems 14 gelöst. Der Reingas-Bypass-Kanal 13 am GGW wird im Folgenden als "GRB" und das Sumpferweiterungssystems 14 als "SES" abgekürzt. Der GRB 13 und das SES 14 können bereits beim Bau der ursprünglichen MW-REA 1 mit geplant und/oder installiert werden oder sie können bei einer existierenden MW-REA 1 nachgerüstet werden.

Die erfindungsgemäße Ausführung der CA-REA besteht somit insbesondere aus den folgenden Komponenten
- GGW 2 (für MW als Absorptionsmittel ausgelegt)
- Wäscher 3 (für MW als Absorptionsmittel ausgelegt)
- GRB 13
- SES 14

Wie aus Figur 3 ersichtlich, strömt das zum Beispiel aus einem Kraftwerk oder einer Müllverbrennungsanlage (nicht dargestellt) stammende Rauchgas durch den GGW 2 und wird hierbei abgekühlt. Die Funktionsweise des GGW 2 ist dem Fachmann bekannt und wird hier daher nicht näher erläutert. Der GGW 2 ist schematisch als Rotationswärmeübertrager dargestellt, der rauchgasseitig 2a und reingasseitig 2b durchströmt wird und durch die Drehbewegung die Wärme vom Rauchgasstrom zum Reingasstrom 16 transportiert.

Die Bauform der Wärmeübertragungseinrichtung ist für die Erfindung unerheblich. Es könnte anstatt des erwähnten GGW 2 zum Beispiel ebenso ein bekanntes Wärmeverschiebesystem mit zwei separaten Wärmeübertragern und einem Wärmeübertragungsmedium verwendet werden.

Die Erfindung wird im Folgenden anhand eines als Sprühturm ausgebildeten Absorbers erläutert. Anstelle von Sprühebenen und Sprühdüsen könnte aber ebenso eine beliebige Verteileinrichtung zur Oberflächenvergrößerung des Absorptionsmittels (wie zum Beispiel ein in einer Ebene des Absorptionsturms angeordnetes Lochblech oder ein entsprechend angeordneter Siebboden) eingesetzt werden.

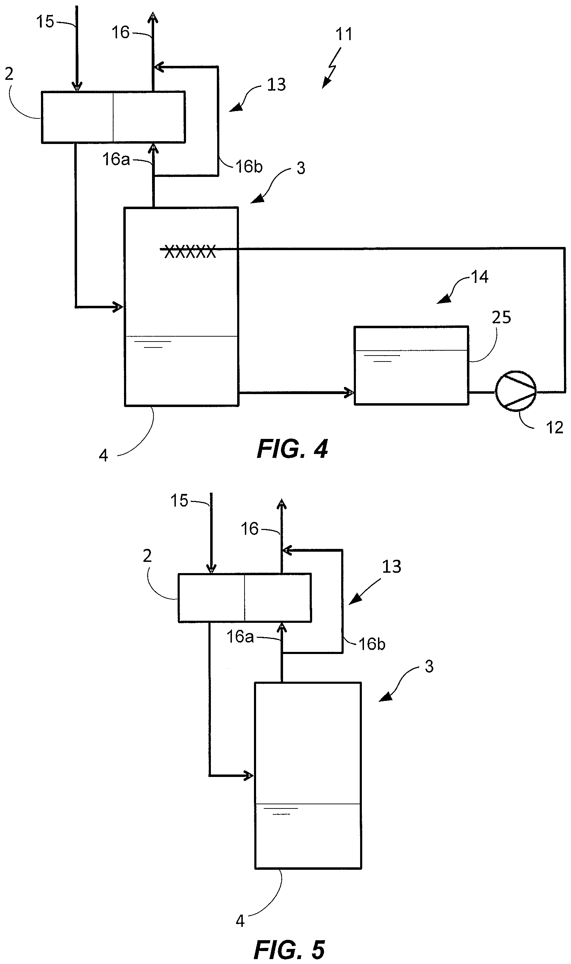

Das gekühlte Rauchgas strömt in den unteren Bereich eines Absorbtionsturms 17 des Wäschers 3 ein und steigt in ihm auf. Auch wenn im Folgenden der Wäscher als Gegenstromwäscher beschrieben wird könnte ebenso ein Gleichstrom oder ein Gleich-/Gegenstromwäscher verwendet werden. In einer im oberen Bereich des Wäschers 3 befindliche Sprühebene 18 sind Düsen 19 angeordnet, die die KalksteinSuspension als Waschsuspension auf das aufsteigende Rauchgas düsen. Auch wenn nur eine Sprühebene 18 dargestellt ist können mehrere Sprühebenen vorgesehen werden, damit die Zuleitungen zu den Ebenen und Düsen kleinere Durchmesser haben und damit den Rauchgasweg möglichst wenig versperren. Die im Rauchgas befindlichen Schwefelverbindungen reagieren mit der Waschsuspension. Das gereinigte Rauchgas strömt dann als Reingasstrom 16 aus dem Wäscher 3 und bildet mindestens zwei Teilströme 16a und 16b, wobei ein Teilstrom 16a durch den GGW 2 strömt und hierbei Wärme - vom Rauchgasstrom 15 aufnimmt, und Teilstrom 16b über den erfindungsgemäßen GRB 13 am GGW 2 vorbeigeleitet wird. Die Funktionsweise des GRB 13 wird unter Bezugnahme auf Figuren 5-10 näher dargestellt. Die Teilströme 16a, 16b werden dann wieder zum Reingasstrom 16 zusammengeführt und zum Kamin (nicht dargestellt) geleitet.

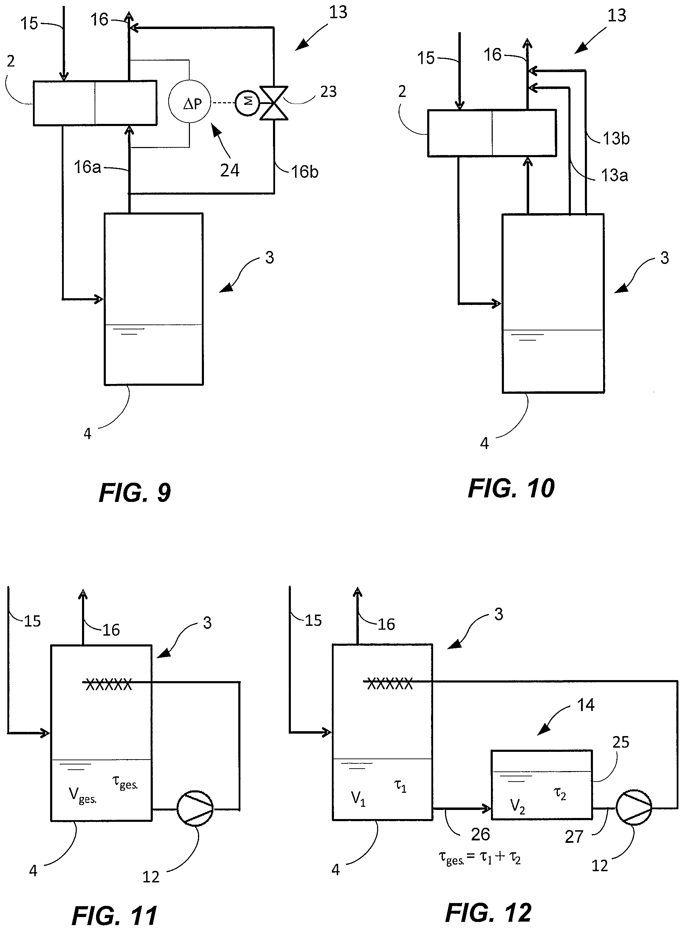

Die Waschsuspension rieselt im Absorptionsturm 17 nach unten in den Wäschersumpf 4. Im Wäschersumpf 4 wird - wie bereits einleitend zur bekannten KS-REA 6 beschrieben - das Umsetzungsprodukt (Calciumsulfit) des im Rauchgas enthaltenen Schwefeldioxides durch Zugabe von Sauerstoff (Luft) zu Calciumsulfat (Gips) aufoxidiert. Hierzu wird über Kompressoren oder Gebläse 10 Oxidationsluft in die im Wäschersumpf aufgefangene Suspension gepumpt. Der Wäschersumpf 4 steht im Suspensionsaustausch mit dem erfindungsgemäßen SES 14, der weiter unten unter Bezugnahme auf Figuren 12-21 noch detaillierter dargestellt wird. Über ein Pumpensystem 12 (bestehend aus einer oder mehreren Pumpen) wird die Suspension wie in Figur 3 gezeigt auf das Niveau der Sprühebene 18 gepumpt und wiederum über die Düsen auf das zu reinigende Rauchgas gesprüht. Die Kalksteinsuspension zirkuliert somit im bevorzugten Ausführungsbeispiel von der Sprühebene 18 durch den Absorptionsturm 17, Wäschersumpf 4, SES 14 und über das Pumpensystem 12 zurück zur Sprühebene 18.

Die Zubereitung von Frischabsorbens im Block 20 unter Vermischung von Kalkstein und Prozesswasser, sowie die Zuführung des Absorbens in den Wäscher 3 und die Gips-Ausschleusung und -Aufbereitung im Block 21 sind dem Fachmann bekannt und werden hier nicht näher beschrieben.

Figur 4 zeigt in stark vereinfachter Form die erfindungsgemäße CA-REA wiederum als KS-REA11, und zwar mit GGW 2, mit dem für Meerwasser als Absorptionsmittel ausgelegten Wäscher 3 mit Sumpfvolumen V_{MW}, mit dem GRB 13 am GGW 2 und mit dem Sumpferweiterungssystem 14. Während das bevorzugte Ausführungsbeispiel die Kalkstein-REA 11 mit GRB 13 und SES 14 zeigt, ist es gemäß weiteren Ausführungsbeispielen auch möglich die erfindungsgemäße CA-REA auch nur mit GRB 13 oder nur mit SES 14 auszustatten. Sollte zum Beispiel die ursprüngliche MW-REA ohne GGW 2 angelegt sein oder ergeben sich aufgrund der Auslegung der ursprünglichen MW-REA im KS-Betrieb Druckverluste, die anderweitig kompensierbar sind, so könnte die erfindungsgemäße CA-REA lediglich mit dem SES 14 ausgestattet werden (ein ggf. vorhandener GGW 2 könnte dabei ausser Betrieb gesetzt werden).

Vorteilhafterweise lässt sich die erfindungsgemäße CA-REA wiederum auch leicht in eine MW-REA umwandeln. Durch Beibehalten der grundlegenden Strukturen der MW-REA (d.h. Beibehalten des für Meerwasser-Absorber optimierten bzw. ausgelegten GGWs und Wäschers) ist ein erneuter Wechsel des Absorptionsmittels Kalkstein bzw. Kalkhydrat auf Meerwasser möglich. Gegebenenfalls müsste hierzu lediglich der GRB 13 verschlossen werden und die ursprünglichen Meerwasserbereitstellungsanlagen bzw. Meerwasseraufbereitungslage (siehe Figur 1) reaktiviert werden.

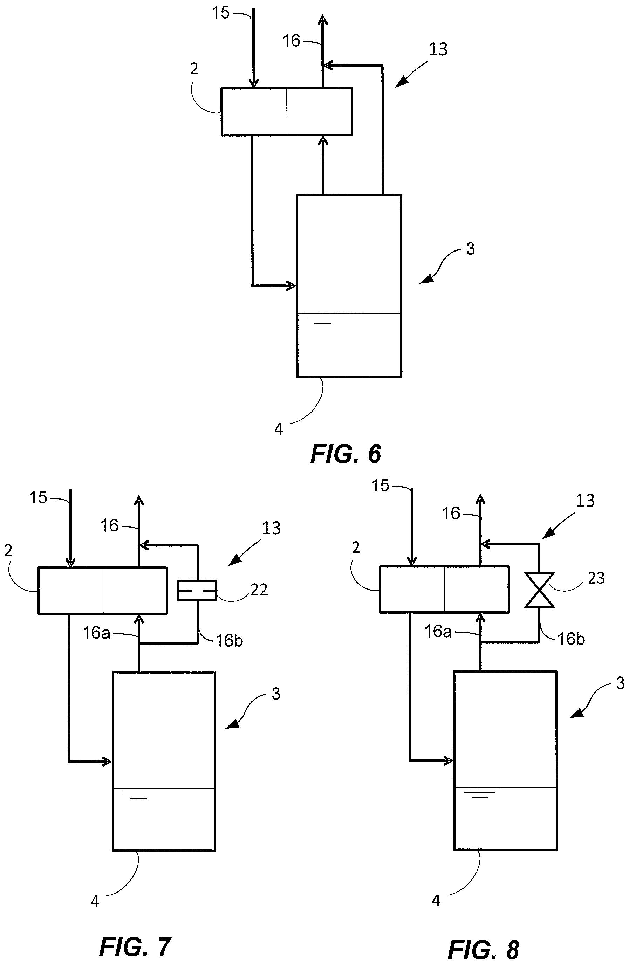

Unter Bezugnahme auf Figuren 5-10 wird nun die erfindungsgemäße CA-REA als KS-REA 11 mit GRB 13 beschrieben, wobei die Figuren schematisch lediglich die hier relevanten Details zeigen (und zusätzliche Elemente wie Pumpe(n), Sprühebenen, Rührwerke etc. zur vereinfachten Darstellung nicht gezeigt sind). Bei den Ausführungsformen der Figuren 5-10 kann erfindungsgemäß zusätzlich das SES 14 vorgesehen werden. Die erhöhten Druckverluste im Betrieb mit Kalkstein können verringert oder sogar kompensiert werden, in dem nur ein Teil 16a des Reingasstroms 16 durch die Reingasseite 2b des GGW 2 geführt und der verbleibende Teil 16b am GGW vorbeigeführt wird. Dies geschieht durch die Verwendung des in Figur 5 dargestellten GRB 13. Der GRB 13 verbindet strömungstechnisch den Reingas-Strömungsraum vor dem GGW 2 mit dem Reingas-Strömungsraum hinter dem GGW 2. Dadurch wird erreicht, dass ein Teil 16b des Reingasstroms nicht durch den GGW 2 strömt, sondern über den GRB 13 am GGW vorbeigeführt wird. Gemäß dem in Figur 5 dargestellten Ausführungsbeispiel wird das Reingas dabei dem Reingaskanal vor dem GGW entnommen. Gemäß einem in Figur 6 dargestellten alternativen Ausführungsbeispiel kann das Reingas aber auch aus dem oberen Teil des Wäschers 3 (Absorbers) entnommen werden.

Wie groß die Teilmenge an Reingas ist, die über den Teilstrom 16b durch den GRB 13 strömt, wird durch den Strömungswiderstand des GRB 13 bestimmt. Vorzugsweise wird die Teilmenge (bzw. der Strömungswiderstand) so gewählt, dass der Druckverlust über die Reingasseite 2b des GGW 2 beim Betrieb als Kalkstein-REA geringer ist als im Betrieb als MW-REA. Dadurch können die erhöhten Druckverluste in anderen Anlagenteilen (Wäscher, Reingaskanal), die beim Betrieb als Kalkstein-REA auftreten, (teilweise) kompensiert werden. Die Teilmenge an Reingas kann aber z.B. auch so gewählt werden, dass der Druckverlust über die Reingasseite 2b des GGW bei beiden Verfahrensvarianten gleich ist.

Der Strömungsquerschnitt des GRB 13 wird so gewählt, dass sich die für Rauchgaskanäle üblichen Gasgeschwindigkeiten ergeben. Bevorzugterweise wird der GGW 2 reingasseitig 2b weiterhin durchströmt. Prinzipiell muss der GGW 2 aber nicht beim KS-REA Betrieb mitlaufen (bzw. rotieren). Das Mitlaufen bietet jedoch den Vorteil, dass hierdurch der Wasserbedarf (insbesondere der Bedarf an Prozesswasser) der erfindungsgemäßen CA-REA verringert wird. Das liegt daran, dass das ungereinigte Rauchgas am Wäschereintritt kälter wird, dadurch weniger Wasser aus dem Wäscher 3 verdampft wird und entsprechend weniger frisches Wasser zugespeist werden muss.

Wie oben erwähnt, ist eine starke Abkühlung des ungereinigten Gases erwünscht. Daher sollte der Strom durch den GGW hoch sein. Andererseits ergibt ein hoher Strom durch den GGW 2 einen hohen Druckverlust, und die Senkung des Druckverlusts ist Ziel des GRBs 13. Die gewählte Stromaufteilung ist letztendlich eine Frage des wirtschaftlichen Optimums bzgl. Wasserverbrauch einerseits und Energiebedarf für Druckerhöhung andererseits (zum Beispiel durch Energiebedarf eines dem Wäscher vorgeschalteten Gebläses). Die technischen Grenzen z.B. max. mögliche Druckerhöhung des Gebläses und anlagenspezifische Vorgaben z.B. Mindest-Reingastemperatur im Kamin müssen natürlich ebenso beachtet werden. Der Fachmann wird daher die Teilstromaufteilung spezifisch für eine Anlage unter Bezugsgrößen wie Kosten für Wasserbereitstellung, Energiekosten, etc. vornehmen.

Technisch ergibt sich die Aufteilung der Ströme 16a, 16b durch die Strömungswiderstände im GGW 2 und im GRB 13. Der GRB 13 bzw. sein Strömungswiderstand kann so ausgelegt werden, dass sich die gewünschte Strömungsverteilung ergibt.

Der erforderliche Strömungswiderstand des GRB 13 wird maßgeblich durch eine lokale Querschnittverengung im GRB erreicht. Hierzu können gemäß einem in Figur 7 dargestellten Ausführungsbeispiels eine oder mehrere Blenden 22 eingesetzt werden, die lokale invariable Querschnittsverengungen bilden. Ändert sich der Strömungswiderstand über den GGW (z.B. durch Verschmutzung) kann es erforderlich sein, den Strömungswiderstand des GRB anzupassen. Dazu können die eingesetzten Blenden 22 bei Anlagenstillstand getauscht werden.

Um eine Anpassung des Strömungswiderstands im Betrieb zu erlauben, werden gemäß weiterer Ausführungsformen manuell zu bedienenden Ventile 23 bzw. Klappen im Strömungsweg (siehe Figur 8) eingesetzt. Diese bilden im GRB 13 eine lokale variable Querschnittsverengung.

Gemäß weiteren Ausführungsformen wird eine Automatisierung mit variablem Strömungswiderstand als Stellgröße verwendet. Je nach Anwendung kommen verschiedenen Messgrößen in Betracht wie zum Beispiel Temperatur im Reingaskanal, Druckverlust über GGW (ΔP, siehe Figur 9) oder GRB, Volumen- oder Massenstrommessung im GRB. Hierzu wird - wie in Figur 9 skizziert - einen Regelkreis mit Ventilsteuerung 24 und damit einen GRB 13 mit variabler Querschnittsverengung und Regelung vorzusehen.

Vorzugsweise können statt einem Kanal für den GRB, mehrere Teilkanäle 13a, 13b eingesetzt werden (siehe Figur 10).

Unter Bezugnahme auf Figuren 12-21 wird nun die erfindungsgemäße CA-REA als KS-REA 11 mit dem Sumpferweiterungssystem 14 (SES) beschrieben, wobei die Figuren wiederum schematisch nur die relevanten Details zeigen und zusätzliche Elemente (wie GGW 2 und/oder GRB 13, Absorbenszubereitung, etc.) aus Gründen einer vereinfachten Darstellung nicht gezeigt sind.

Ein Wäscher einer wie in Figur 1 gezeigten MW-REA verfügt nicht über ein ausreichendes Sumpfvolumen für den Betrieb als KS-REA. Das geringe Sumpfvolumen V_{MW} führt zu unzureichenden Verweilzeiten der Waschsuspension im Kalksteinbetrieb. Bei der KS-REA 11 wird das restliche, geforderte Sumpfvolumen V_{KS}-V_{MW} außerhalb des Wäschers in dem SES 14 bereitgestellt. Das Volumen des SES ist nach den üblichen Auslegungsmethoden so bemessen, dass sich in der REA eine ausreichende Gesamtverweilzeit ergibt. Die erforderliche Gesamtverweilzeit ergibt sich demnach aus einer Vorverweilzeit im Wäschersumpf 4 und einer Nachverweilzeit außerhalb des Wäschersumpfs.

In Figur 11 ist schematisch zunächst ein Wäscher (ohne SES) gezeigt mit einem Sumpfvolumen V_{GES} = V_{MW} und einer entsprechenden Verweilzeit τ_{ges}. Figur 12 zeigt die erfindungsgemäße CA-REA mit dem SES 14, das neben einem Erweiterungstank 25 auch Verbindungsleitungen 26, 27 für die Suspensionszirkulation von dem Wäschersumpf 4 zum Umwälzpumpensystem 12 aufweist. Das Volumen V₁ in Figur 12 entspricht dabei dem Sumpfvolumen V_{MW} eines für MW ausgelegten Wäschers wie in Figur 11 gezeigt. Das zusätzliche Volumen V₂ des Erweiterungstanks wird dabei so gewählt, dass V₁ + V₂ einem für KS-REA üblichem Sumpfvolumen V_{ges} = V_{KS} entspricht und damit auch eine Verweilzeit τ_{ges} = τ₁ + τ₂ erreicht wird, die ausreichend ist für die nötige Lösung des Kalksteins und die Gipskristallbildung. Das benötigte Gesamtvolumen V_{KS} der KS-REA hängt unter anderem von der abgeschiedenen SO₂-Fracht ab. Bei üblichen Beispielbedingungen bezüglich der SO₂-Fracht wird von einem Verhältnis des SES-Volumens V₂ zum Wäschervolumen V₁ von ca. 1,5-3 ausgegangen. Beim Betrieb der erfindungsgemäßen CA-REA mit Kalkhydrat entfällt zwar die nötige Verweildauer für eine Lösung von Kalkstein, eine erhöhte Verweilzeit für die Gipskristallbildung ist jedoch erforderlich. Das Volumenverhältnis beträgt bei der erfindungsgemäßen CA-REA für den Betrieb mit Kalkhydrat ca. 0,6 - 1,7. Wegen der sehr unterschiedlichen MW-REA Bauformen und resultierenden Wäschersumpfvolumina V_{MW}, können sich auch Volumenverhältnisse ergeben, die sich von den genannten erheblich unterscheiden.

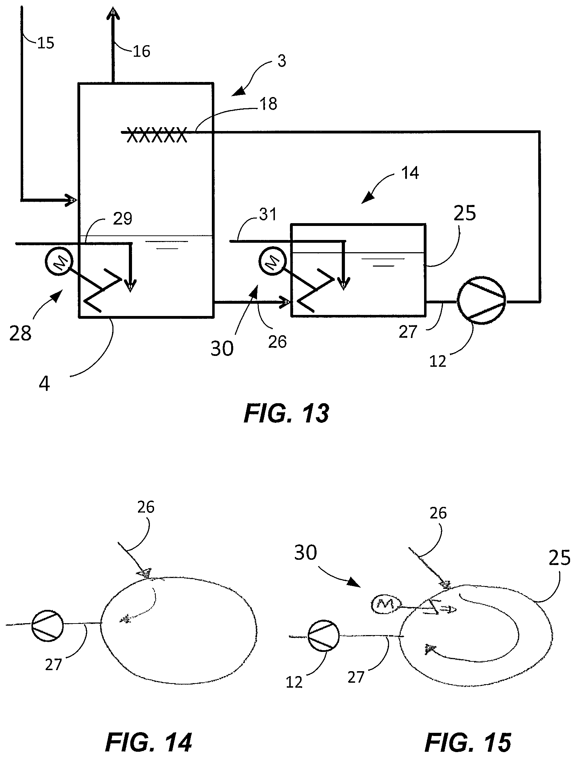

In der bevorzugten Ausführungsform besteht die erfindungsgemäße CA-REA mit SES 14 insbesondere aus den folgenden in Figur 13 dargestellten Komponenten:
- Wäscher 3 (z.B. Sprühabsorber) mit Wäschersumpf
- Umwälzvorrichtung 28 (z.B. Rührwerke) am Wäschersumpf 4
- Oxidationssystem 29 (z.B. Oxidationsluftlanzen) im Wäschersumpf 4
- Verbindungsleitung 26 zwischen Wäschersumpf 4 und Sumpferweiterungstank 25
- Sumpferweiterungstank 25
- Umwälzvorrichtung 30 (z.B. Rührwerke) im Sumpferweiterungstank 25
- Oxidationssystem 31 (z.B. Oxidationsluftlanzen) im Sumpferweiterungstank 25
- Fördereinrichtung (z.B. Umwälzpumpensystem 12)
- Verbindungsleitung 27 zwischen Sumpferweiterungstank 25 und Fördereinrichtung

Die Waschsuspension sammelt sich nach dem Waschvorgang im Wäschersumpf 4. Die Waschsuspension wird im Sumpf 4 mit Hilfe der Rührwerke 28 umgewälzt, damit sich die Feststoffe in der Suspension nicht absetzen. Über die Oxidationsluftlanzen 29 wird der Waschsuspension Luft zugeführt, um Sulfite zu oxidieren. Über eine Verbindungsleitung 26 strömt die Waschsuspension in den Sumpferweiterungstank 25. Die Waschsuspension wird im Sumpferweiterungstank 25 mit Hilfe der Rührwerke 30 umgewälzt, damit sich die Feststoffe in der Suspension nicht absetzen. Über die Oxidationsluftlanzen 31 wird der Waschsuspension Luft zugeführt, um die verbleibenden Sulfite zu oxidieren. Aus dem Sumpferweiterungstank 25 wird die Waschsuspension über eine oder mehrere Verbindungsleitungen 27 und das Umwälzpumpensystem 12 der einen oder mehreren Sprühebenen 18 zugeführt. Frisches Absorbens kann an einer beliebigen Stelle zu dosiert werden (Wäschersumpf 4, Verbindungsleitungen 26, 27, Sumpferweiterungstank 25, Saug- & Druckleitung der Umwälzpumpen). Das gleiche gilt für den Abzug der Gipssuspension aus dem System. Bevorzugt wird die Gipssuspension jedoch aus dem Wäschersumpf 4 abgezogen und die Kalksteinsuspension dem Sumpferweiterungstank 25 zugeführt.

Für die Ausbildung einer gleichmäßigen Verweilzeitverteilung im gesamten Sumpf wird an der Wand des Sumpferweiterungstanks 25 zwischen die Einströmöffnung der Verbindungsleitung 26 und den Ansaugöffnungen der Verbindungsleitungen 27 des Sprühebenen-Pumpensystems 12 an der in Umfangsrichtung kürzeren Strecke (mindestens) ein Rührwerk 30 platziert. Das Rührwerk 30 wird so ausgerichtet, dass die Förderrichtung des Rührwerks 30 nicht-radial zur Tankmitte (siehe Figur 14), sondern in Richtung der Einströmöffnung (siehe Figur 15) orientiert ist. Dadurch wird vermieden, dass die Gipssuspension aus der Verbindungsleitung 26 in einer Art Kurzschlussströmung wieder den Sprühebenen 18 zugeführt wird, ohne sich vorher ausreichend mit der Suspension im Sumpferweiterungstank 25 gemischt zu haben. Um eine Kurzschlussströmung zu vermeiden, ist es außerdem vorteilhaft, wenn der Winkel zwischen der Hauptströmungsrichtung der einströmenden Suspension und der Verbindungslinie zwischen den Öffnungen der Leitungen 26 und 27 im Tank 25 möglichst groß ist (z.B. durch eine entsprechende Orientierung der Verbindungsleitung 26).

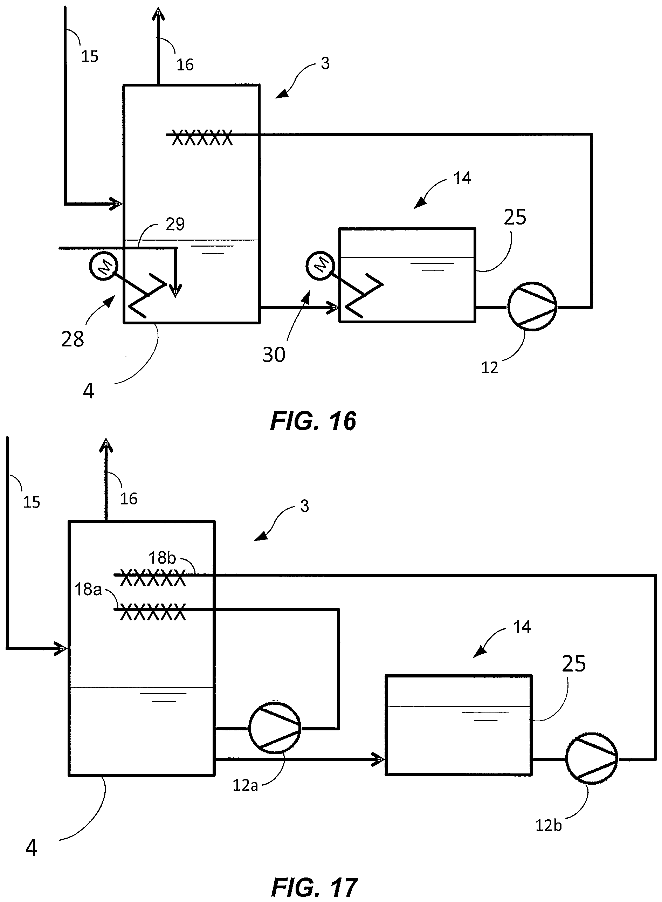

Je nach Randbedingungen, kann es ausreichend sein, Oxidationsluft nur im Wäschersumpf 4 der Suspension zuzuführen. In diesen Fällen kann die Anlage gemäß einer alternativen Ausführungsform ohne Oxidationssystem im SES 14 ausgeführt werden (siehe Figur 16).

Weiterhin kann gemäß anderer Ausführungsformen die Anlage 11 auch mit mehreren Umwälzpumpensystemen 12a, 12b ausgestattet sein, wobei es bei bestimmten Randbedingungen vorteilhaft ist, nicht alle Umwälzpumpensysteme 12b saugseitig mit dem Sumpferweiterungstank, sondern ein Pumpensystem 12a saugseitig mit dem Wäschersumpf 4 zu verbinden. Ein solches System mit separaten Verbindungsleitungen zu respektiven Sprühebenen 18a und 18b ist in der Ausführungsform der Figur 17 gezeigt.

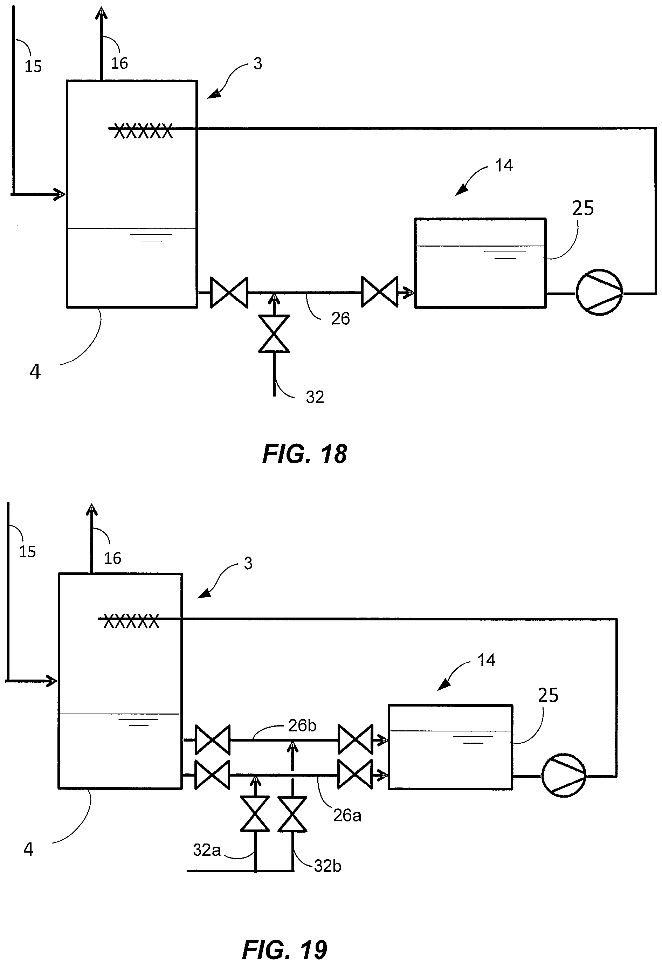

Prinzipiell besteht die Gefahr, dass sich Feststoffe in der Verbindungsleitung 26 anlagern und die Leitung verschließen können. Es bietet sich daher an, mehrere kleinere Verbindungsleitungen 26a, 26b (wie in Figur 19 dargestellt) statt einer großen Verbindungsleitung zu installieren. Das hat außerdem für die Auslegung eines Spülsystems Vorteile, denn für die Spülung der Verbindungsleitung 26 wird ein gewisser Spülwasserstrom benötigt, um eine ausreichende Strömungsgeschwindigkeit beim Spülvorgang zu erreichen. Zur Realisierung dieses Spülwasserstroms muss eine entsprechende Spülwasserversorgung vorhanden sein (Vorratsbehälter, Pumpen, ...). Eine solche Spülwasserversorgung kann über eine Spülwasserzuleitung 32 an die Verbindungsleitung 26 zwischen Wäschersumpf 4 und Erweiterungstank 25 gekoppelt sein (wie es in Figur 18 gezeigt ist). Bei großen Umwälzmengen und damit großem Querschnitt der Verbindungsleitung 26 wird die Spülwassermenge und die Spülwasserversorgung relativ groß. Es bietet sich auch daher an, mehrere kleinere Verbindungsleitungen 26a, 26b (wie in Figur 19 dargestellt) statt einer großen Verbindungsleitung zu installieren und diese über separate Spülwasserzuleitungen 32a, 32b nacheinander zu spülen. Dadurch kann die Spülwasserversorgung entsprechend kleiner dimensioniert werden. Was hier anhand der Verbindungsleitung 26 erläutert wurde, gilt in gleicher Weise für die Verbindungsleitung 27.

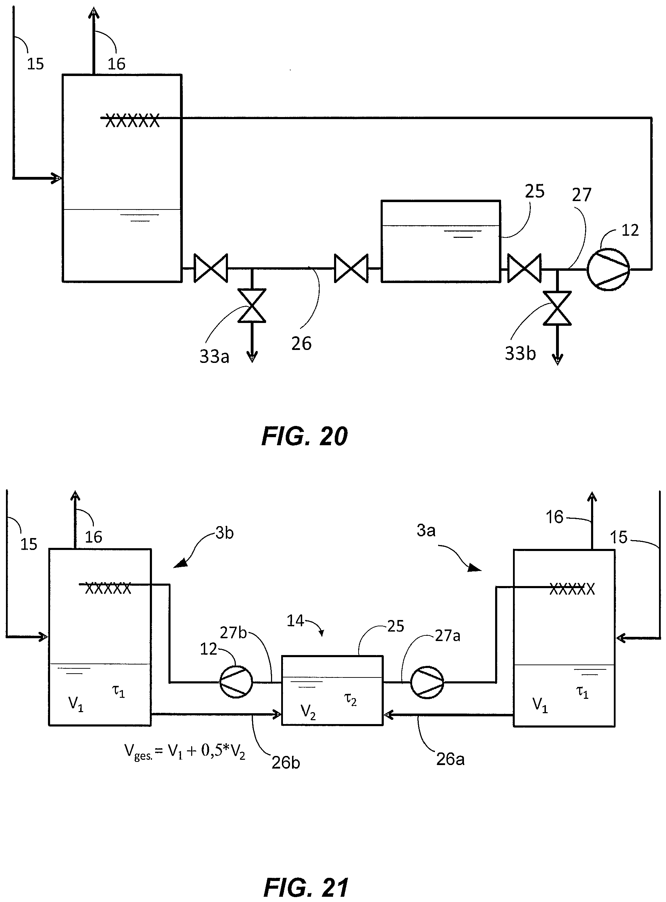

Wie in Figur 20 dargestellt, kann an Stelle von einer Spülung auch eine Entleerung der verbindenden Rohrleitungen (26 und/oder 27) über Entleerungseinrichtungen (33a, 33b) erfolgen. Die Entleerung erfolgt üblicherweise möglichst zügig mit einem relativ großen Volumenstrom in eine Grube. Die Grube ist üblicherweise für das gesamte Entleerungsvolumen ausgelegt. Über eine Fördereinrichtung wird die Grube mit einem relativ kleinen Volumenstrom entleert. Auch bei einer Anlage mit Entleerungseinrichtung(en) ist es vorteilhaft wenn statt einer großen, mehrere kleine Verbindungsleitungen (z.B. 26a, 26b) eingesetzt werden. Die Entleerungen der Leitungen können dann nacheinander erfolgen und die Grube kann dadurch entsprechend kleiner dimensioniert werden. Spülung und Entleerung können auch kombiniert eingesetzt werden (nicht dargestellt).

Der Füllstand im Sumpferweiterungstank 25 kann nicht höher sein als im Wäschersumpf 4. Wenn die Böden beider Behälter auf einer Höhe stehen können sich dadurch unwirtschaftlich große Durchmesser für den Sumpferweiterungstank 25 ergeben. Durch den Einsatz mehrerer Sumpferweiterungstanks 25 kann dieses Problem gelöst werden.

Bei Anlagen mit zwei und mehr Wäschern 3a, 3b kann gemäß einer weiteren Ausführungsform der Erfindung auch ein gemeinsames Sumpferweiterungssystem 14 für mehrere Wäscher verwendet werden wie es in Figur 21 dargestellt ist.

Auch wenn in der vorliegenden Anmeldung auf eine CA-REA abgestellt wurde, ist es grundsätzlich denkbar als Absorptionsmittel auch Ammoniak zu verwenden. Bei einer solchen Ammoniak-REA wird statt Kalksteinsuspension dem System Ammoniak (NH₃) oder Ammoniakwasser (typischerweise 25%-Gew. NH₃ + 75%-Gew. H₂O) zugeführt. Im Sumpf bildet sich Ammoniumsulfat ((NH₄)₂SO₄), welches (wenn die Löslichkeitsgrenze überschritten wird) in Form von Kristallen ausfällt (analog zum Gips). Die Suspension wird aus dem Sumpf abgezogen und weiterbehandelt. Alternativ kann die Sumpfflüssigkeit knapp unter der Löslichkeitsgrenze gehalten werden. Dann findet keine Kristallisation im Sumpf statt. Stattdessen wird die Flüssigkeit abgezogen, weiterbehandelt und zurückgespeist. In einer externen Weiterbehandlungsanlage findet dann die (teilweise) Kristallisation und Ausschleusung des Ammoniumsulfats statt.

### Bezugszeichenliste

- 1: Meerwasser-REA
- 2: Gas-Gas-Wärmeübertrager
- 2a, 2b: Rauchgasseite und Reingasseite
- 3, 3a, 3b: Wäscher (ausgelegt für Meerwasserabsorbens)
- 4: Wäschersumpf (kleines Volumen)
- 5: Meerwasserbehandlungsanlage
- 6: Kalkstein-REA
- 7: Wäscher (ausgelegt für Kalksteinsuspension)
- 8: Wäschersumpf (großes Volumen)
- 9: Rezirkulationspumpe
- 10: Kompressoren / Gebläse
- 11: adaptierte KS-REA
- 12, 12a, 12b: Pumpensystem
- 13, 13a, 13b: Reingas-Bypasskanal bzw. -Teilkanäle
- 14: Sumpferweiterungssystem
- 15: Rauchgasstrom
- 16: Reingasstrom
- 16a, 16b: Teilströme des Reingasstroms
- 17: Absorptionsturm
- 18, 18a, 18b: Verteileinrichtung (Sprühebene)
- 19: Düsen
- 20: Frischabsorbenszubereitung
- 21: Gips-Ausschleusung und -Aufbereitung
- 22: Blende
- 23: Ventil bzw. Klappe
- 24: Regelkreis mit Ventilsteuerung
- 25: Erweiterungstank
- 26, 26a, 26b: Verbindungsleitung zum Wäschersumpf
- 27, 27a, 27b: Verbindungsleitung zum Pumpensystem
- 28: Umwälzvorrichtung (Rührwerk/Rührwerke)
- 29, 31: Oxidationssystem (Oxidationsluftlanze)
- 30: Umwälzvorrichtung (Rührwerk/Rührwerke) im SES
- 32, 32a, 32b: Spülwasserzuleitung
- 33a, 33b: Entleerungseinrichtung

## Patentansprüche

1. Rauchgasentschwefelungsanlage (11) mit mindestens einem Wäscher (3) mit einer Verteileinrichtung (18) zum Verteilen eines Absorptionsmittels in den durch den Wäscher strömenden Rauchgasstrom (15) und einem am Boden des Wäschers angeordneten Wäschersumpf (4), sowie mit einer Wärmeübertragungseinrichtung (2) zur Übertragung von Wärme aus dem in den Wäscher einströmenden Rauchgasstrom (15) auf den aus dem Wäscher austretenden Reingasstrom (16), wobei der Waschsuspension aus dem Wäschersumpf (4) Oxidationsluft zuführbar ist und die Waschsuspension im Umlauf der Verteileinrichtung (18) zuführbar ist, **dadurc h gekennzeichnet,** dass für den Einsatz von Kalkstein oder Kalkhydrat als Absorptionsmittel der Wärmeübertragungseinrichtung (2) ein Reingas-Bypasskanal (13) zugeordnet ist.

2. Rauchgasentschwefelungsanlage (11) nach Anspruch 1, **dadurch geke nnzeichnet,** dass der Strömungswiderstand des Reingas-Bypasskanals (13) durch mindestens eine im Kanal befindliche, lokale Querschnittsverengung bestimmt ist.

3. Rauchgasentschwefelungsanlage (11) nach Anspruch 2, **dadurch geke nnzeichnet,** dass mindestens eine Querschnittsverengung im Betrieb invariabel ist und bevorzugterweise durch eine einsetzbare Blende (22) realisiert ist.

4. Rauchgasentschwefelungsanlage (11) nach Anspruch 2, **dadurch geke nnzeichnet,** dass mindestens eine Querschnittsverengung im Betrieb variabel ist und bevorzugterweise durch ein Ventil (23) und/oder Klappen realisiert ist.

5. Rauchgasentschwefelungsanlage (11) nach Anspruch 4, **dadurch geke nnzeichnet,** dass mindestens eine variable Querschnittsverengung basierend auf einer oder mehreren Stellgrößen im Betrieb angepasst wird, wobei bevorzugterweise mindestens eine der folgenden Stellgrößen verwendet wird: Temperatur im Reingaskanal, Druckverlust über die Wärmeübertragungseinrichtung (2) oder über den Reingas-Bypasskanal, Volumen- oder Massenstrommessung im Reingas-Bypasskanal.

6. Rauchgasentschwefelungsanlage (11) nach einem der vorhergehenden Ansprüche, **dadurch gekennzeichnet, dass** dem Wäschersumpf ein Sumpferweiterungssystem (14) zur Vergrößerung des Sumpfvolumens zugeordnet ist, wobei dem Wäschersumpf (4) und/oder dem Sumpferweiterungssystem (14) Oxidationsluft zuführbar ist, und die Waschsuspension aus dem Wäschersumpf (4) und/oder dem Sumpferweiterungssystem (14) im Umlauf der Verteileinrichtung (18) zuführbar ist.

7. Rauchgasentschwefelungsanlage (11) nach Anspruch 6, **dadurch gekennzeichnet, dass** der Wäscher (3) eine Umwälzvorrichtung (28) sowie ein Oxidationssystem (29) aufweist und mit einem Umwälzpumpensystem (12) zum Pumpen der Suspension zur Verteileinrichtung (18) in einem Absorptionsturm (17) des Wäschers gekoppelt ist, und das Sumpferweiterungssystem (14) mindestens einen Sumpferweiterungstank (25) mit einer weiteren Umwälzvorrichtung (30) aufweist, der über eine oder mehrere Verbindungsleitungen (26, 27) mit dem Wäschersumpf (4) im Suspensionsaustausch steht.

8. Rauchgasentschwefelungsanlage (11) nach Anspruch 7, **dadurch geke nnzeichnet,** dass zwei oder mehr Verbindungsleitungen (26a, 26b, 27) zwischen Wäschersumpf (4) und Erweiterungstank (25) und/oder zwischen Erweiterungstank (25) und Pumpensystem (12) vorgesehen sind.

9. Rauchgasentschwefelungsanlage (11) nach Anspruch 8, **dadurch geke nnzeichnet,** dass jede Verbindungsleitung eine eigene Spülwasserzuleitung (32a, 32b) und/oder Entleerungseinrichtung (33a, 33b) aufweist.

10. Rauchgasentschwefelungsanlage (11) nach Anspruch 7, 8, oder 9, **dadurc hgekennzeichnet,** dass die weitere Umwälzvorrichtung (30) mindestens ein zwischen der Einströmöffnung der Verbindungsleitung (26) und der Ansaugöffnungen der Verbindungsleitungen (27) zum Umwälzpumpensystem (12) angeordnetes Rührwerk ist.

11. Rauchgasentschwefelungsanlage (11) nach Anspruch 10, **dadurch geke nnzeichnet,** dass der Erweiterungstank (25) einen kreisförmigen Grundriss hat, und das Rührwerk mit einer in Richtung der Einströmöffnung orientierten Förderrichtung angeordnet ist.

12. Rauchgasentschwefelungsanlage (11) nach einem der Ansprüche 7 - 11, **da durch gekennzeichnet,** dass der Wäscher (3) ein separates Umwälzpumpensystem (12a) aufweist.

13. Rauchgasentschwefelungsanlage (11) nach einem der Ansprüche 7 - 12, **da durch gekennzeichnet,** dass die Rauchgasentschwefelungsanlage zwei Wäscher (3a, 3b) aufweist und beide Wäscher im Suspensionsaustausch mit dem Sumpferweiterungssystem (14) stehen.

14. Rauchgasentschwefelungsanlage (11) nach einem der vorhergehenden Ansprüche, **dadurch gekennzeichnet, dass** die Verteileinrichtung (18) in Form von mindestens einer Sprühebene mit Sprühdüsen (19) ausgeführt ist.

15. Rauchgasentschwefelungsanlage (11) nach einem der vorhergehenden Ansprüche, **dadurch gekennzeichnet, dass** die Wärmeübertragungseinrichtung (2) ein Gas-Gas-Wärmeübertrager ist.

## Claims

1. Flue gas desulphurization device (11) having at least one scrubber (3) having a distribution device (18) for distributing an absorbent into the flue gas flow (15) flowing through the scrubber and a scrubber sump (4) located at the bottom of the scrubber, as well as a heat exchanger device tool for transferring heat from the flue gas flow (15) flowing into the scrubber to the clean gas flow (16) flowing out of the scrubber, wherein oxidation air can be fed into the scrubber suspension from the scrubber sump (4) and the scrubber suspension can be provided in a circulating manner to the distribution device (18),
**characterized in that** a clean gas bypass channel (13) is provided for the heat exchanger device (2) for the use of lime stone or calcium hydrate as absorbent.

2. Flue gas desulphurization device (11) according to claim 1 **characterized in that** the flow resistance of the clean gas bypass channel (13) is controlled by at least one local cross area reduction located in the channel.

3. Flue gas desulphurization device (11) according to claim 2 **characterized in that** at least one flow area reduction is invariable in operation and, preferably, is realized by an insertable shutter (22).

4. Flue gas desulphurization device (11) according to claim 2, **characterized in that** at least one flow area reduction is variable in operation and, preferably, is realized by a valve (23) and/or flaps.

5. Flue gas desulphurization device (11) according to claim 4 **characterized in that** at least one variable flow area reduction is adjusted in operation based on one or more variables, wherein preferably at least one of the following variables is used: temperature in the clean gas channel, pressure loss across the heat exchanger device (2) or across the clean gas bypass channel, volume or mass flow measurement in the clean gas bypass channel.

6. Flue gas desulphurization device (11) according to one of the preceding claims, **characterized in that** a sump extension system (14) is associated with the scrubber sump so as to increase the sump volume, wherein oxidation air can be fed to the scrubber sump (4) and/or the sump extension system (14), and wherein the scrubber suspension from the scrubber sump (4) and/or from the sump extension system (14) can be fed to the circulation of the distributing device (18).

7. Flue gas desulphurization device (11) according to claim 6, **characterized in that** the scrubber (3) comprises a circulating device (28) as well as an oxidation system (29) and is coupled to a circulation pump system (12) for pumping the suspension to the distributing device (18) in an absorption tower (17) of the scrubber, and **in that** the sump extension system (14) comprises at least one sump extension tank (25) having an additional circulating device (30), wherein the sump extension tank is connected to the scrubber sump (4) via one or more connection lines (26, 27) for exchanging suspension.

8. Flue gas desulphurization device (11) according to claim 7, **characterized in that** two or more connection lines (26a, 26b, 27) are provided between the scrubber sump (4) and the extension tank (25) and/or between the extension tank (25) and the pump system (12).

9. Flue gas desulphurization device (11) according to claim 8, **characterized in that** each connection line comprises its own flushing water line (32a, 32b) and/or a draining device (33a, 33b).

10. Flue gas desulphurization device (11) according to claim 7, 8 or 9, **characterized in that** the additional circulating device (30) is at least one stirring device located between the input opening of the connection line (26) and the suction opening of the connection lines (27) to the circulating pump system (12).

11. Flue gas desulphurization device (11) according to claim 10, **characterized in that** the extension tank (25) has a circular cross section, and **in that** the stirring device is arranged such that the transport direction thereof is oriented towards the input opening.

12. Flue gas desulphurization device (11) according to one of claims7 to 11, **characterized in that** the scrubber (3) comprises a separate circulating pump system (12a).

13. Flue gas desulphurization device (11) according to one of claims 7 to 12, **characterized in that** the flue gas desulphurization device comprises two scrubbers (3a, 3b), and **in that** the two scrubbers are provided to exchange a suspension with the sump extensions system (14).

14. Flue gas desulphurization device (11) according to one of the preceding claim, **characterized in that** the distribution device (18) is provided in form of at least one spraying stage having spray nozzles (19).

15. Flue gas desulphurization device (11) according to one of the preceding claim, **characterized in that** the heat exchanger device (2) is a gas-to-gas heat exchanger.

## Revendications

1. Dispositif de désulfuration de gaz de combustion (11) comportant au moins un nettoyeur (3) muni d'un dispositif de distribution (18) pour distribuer un absorbant dans le flux de gaz de combustion (15) circulant dans le nettoyeur et un bac de lavage (4) situé au fond du nettoyeur, ainsi qu'un échangeur de chaleur pour transférer de la chaleur du flux de gaz de combustion (15) circulant dans le nettoyeur au flux de gaz propre (16) sortant du nettoyeur, dans lequel de l'air d'oxydation peut être introduit dans la suspension de lavage du bac de lavage (4) et la suspension de lavage peut être prévue pour circuler vers le dispositif de distribution (18),
**caractérisé en ce qu'**un conduit de dérivation de gaz propre (13) est prévu pour l'échangeur de chaleur (2) pour l'utilisation de calcaire ou de chaux hydratée comme absorbant.

2. Dispositif de désulfuration de gaz de combustion (11) selon la revendication 1, **caractérisé en ce que** le la résistance à l'écoulement du conduit de dérivation de gaz propre (13) est contrôlée par au moins une région de diminution de section locale situé dans le conduit.

3. Dispositif de désulfuration de gaz de combustion (11) selon la revendication 2, **caractérisé en ce qu'**au moins une région de diminution de flux est invariable en fonctionnement et, de préférence, est réalisée par un diaphragme insérable (22).

4. Dispositif de désulfuration de gaz de combustion (11) selon la revendication 2, **caractérisé en ce qu'**au moins une région de diminution de flux est variable en fonctionnement et, de préférence, est réalisée par une soupape (23) et/ou des volets.

5. Dispositif de désulfuration de gaz de combustion (11) selon la revendication 4, **caractérisé en ce qu'**au moins une région de diminution de flux variable est ajustée en fonctionnement en fonction d'une ou plusieurs variables, dans lequel de préférence au moins une des variables suivantes est utilisée: la température dans le conduit de gaz propre, la perte de pression à travers l'échangeur de chaleur (2) ou à travers le conduit de dérivation de gaz propre, la mesure du volume ou du débit massique dans le canal de dérivation de gaz propre.

6. Dispositif de désulfuration de gaz de combustion (11) selon l'une des revendications précédentes, **caractérisé en ce qu'**un système d'extension de bac (14) est associé au bac de lavage de façon à étendre le volume du bac, dans lequel de l'air d'oxydation peut être introduit dans le bac de lavage (4) et/ou le système d'extension de bac (14), et dans lequel la supension de lavage du bac de lavage (4) et/ou du système d'extension de bac (14) peut être introduite dans la circulation du dispositif de distribution (18).

7. Dispositif de désulfuration des gaz de combustion (11) selon la revendication 6, **caractérisé en ce que** le nettoyeur (3) comprend un dispositif de circulation (28) ainsi qu'un système d'oxydation (29) et est couplé à un système de pompe de circulation (12) pour pomper la suspension du dispositif de distribution (18) dans une tour absorbante (17) du nettoyeur, et **en ce que** le système d'extension de bac (14) comprend au moins un réservoir d'extension de bac (25) ayant un dispositif de circulation additionnel (30), dans lequel le réservoir d'extension de bac est connecté au bac de lavage (4) via une ou plusieurs conduites de raccordement (26, 27) pour l'échange de suspension.

8. Dispositif de désulfuration de gaz de combustion (11) selon la revendication 7, **caractérisée en ce que** deux ou plus de deux conduites de raccordement (26a, 26b, 27) sont prévues entre le bac de lavage (4) et le réservoir d'extension (25) et/ou entre le réservoir d'extension (25) et le système de pompe (12).

9. Dispositif de désulfuration de gaz de combustion (11) selon la revendication 8, **caractérisé en ce que** chaque conduite de raccordement comprend sa propre conduite d'eau de rinçage (32a, 32b) et/ou son propre dispositif de vidange (33a, 33b).

10. Dispositif de désulfuration de gaz de combustion (11) selon la revendication 7, 8 ou 9, **caractérisé en ce que** le dispositif de circulation additionnel (30) est au moins un agitateur disposé entre l'ouverture d'entrée de la conduite de raccordement (26) et les ouvertures d'aspiration des conduites de raccordement (27) au système de pompe de circulation (12).

11. Dispositif de désulfuration de gaz de combustion (11) selon la revendication 10, **caractérisé en ce que** le réservoir d'extension (25) a une section transversale circulaire, et **en ce que** l'agitateur est agencé de façon que sa direction de transport soit orientée vers l'ouverture d'entrée.

12. Dispositif de désulfuration de gaz de combustion (11) selon l'une des revendications 7 à 11, **caractérisé en ce que** le nettoyeur (3) comprend un système de pompe de circulation séparé (12a) .

13. Dispositif de désulfuration de gaz de combustion (11) selon l'une des revendications 7 à 12, **caractérisé en ce que** le dispositif de désulfuration de gaz de combustion comprend deux nettoyeurs (3a, 3b), et **en ce que** les deux nettoyeurs sont prévus pour échanger une suspension avec le système d'extension de bac (14) .

14. Dispositif de désulfuration de gaz de combustion (11) selon l'une des revendications précédentes, **caractérisé en ce que** le dispositif de distribution (18) est prévu sous la forme d'au moins un étage de vaporisation ayan des buses de vaporisation (19) .

15. Dispositif de désulfuration de gaz de combustion (11) selon l'une des revendications précédentes, **caractérisé en ce que** l'échangeur de chaleur (2) est un échangeur de chaleur gaz-gaz.
